# EUROPEAN PATENT APPLICATION

(11) **EP 4 530 791 A1**
(43) Date of publication of application: **02.04.2025**
(21) Application number: 24201995.8
(22) Date of filing: 23.09.2024
(51) Int. Cl.: G05G 1/04, B63H 21/21, G05G 5/03, G05G 5/05, B60K 20/06, F16H 59/02

(54) **2-WAY PADDLE SHIFTER FOR SIMULATOR ENVIRONMENT, STEERING WHEEL AND SIMULATOR PROVIDED THEREWITH, AND METHOD THERE FOR**

(30) Priority: 29.09.2023 NL 2035933
(71) Applicant: Heusinkveld Engineering B.V., 9723 JK Groningen (NL)
(72) Inventor: Heusinkveld, Niels, 9723 JK Groningen (NL)
(74) Representative: Arnold & Siedsma

(57) **Abstract**

The invention relates to a 2-way paddle shifter (2, 12) for simulator environment, steering wheel and simulator provided therewith, and method therefor. The 2-way paddle shifter according to the invention, comprises:
- a housing comprising one or more paddles (3), wherein the one or more paddles are provided with a first or pull contact surface (18) for activating a first function and a second or push contact surface (20) for activating a second function;
- a magnet (32) and a magnet contact (36) that are configured for engaging each other to provide a functional resistance against activating the first and/or second function;
- a first pivot (22) and a first slot (24) that are provided in the housing to enable a rotational movement of the respective paddle around the first pivot as a result of activating the first function;
- a second pivot (26) and a second slot (28) that are provided in the housing to enable a rotational movement of the respective paddle around the second pivot as a result of activating the second function;
wherein the first or pull contact surface is provided at a first distance (d₁) from the first pivot and the second or push contact surface is provided at a second distance (d₂) from the second pivot, wherein the first distance is smaller than the second distance.

## Description

The present invention relates to a 2-way paddle shifter that is typically used in a simulator environment. More specifically, the 2-way paddle shifter relates to a 2-way push-pull paddle shifter.

Paddle shifters are used in different applications including racing cars and certain high performance road cars wherein shifting gears can be done by pulling small paddles behind the steering wheel. Pulling a paddle generates an electrical signal that is provided to the controller that then provides the required signals for the desired gear change. To improve user experience and user control a resistance or counterforce is often provided. In some of the applications a permanent magnet is operatively connected with the paddle and by pulling the paddle the magnet is pulled away from another magnet or metal element. Such resistance or counterforce creates a purposeful user experience and improves user control.

In conventional 2-way paddle shifters the paddles can be pushed or pulled depending on the actual functionality that the user intends to activate. Pushing and pulling involve overcoming the same resistance/counterforce. However, considering that the user can generate different pulling forces and pushing forces and considering that pushing and pulling typically involve overcoming the same resistance/counterforces, the user experience and user control is substantially different between pushing and pulling in such 2-way paddle shifter. This negatively influences the user experience and also the user control.

The present invention has for its object to obviate or at least reduce one or more of the above stated problems with conventional paddle shifters and to provide a 2-way paddle shifter that improves user experience and user control.

The present invention provides for this purpose a 2-way paddle shifter for a simulator environment, the paddle shifter comprising:
- a housing comprising one or more paddles, wherein the one or more paddles are provided with a first or pull contact surface for activating a first function and a second or push contact surface for activating a second function;
- a magnet and a magnet contact that are configured for engaging each other to provide a functional resistance against activating the first and/or second function;
- a first pivot and a first slot that are provided in the housing to enable a rotational movement of the respective paddle around the first pivot as a result of activating the first function;
- a second pivot and a second slot that are provided in the housing to enable a rotational movement of the respective paddle around the second pivot as a result of activating the second function;
wherein the first or pull contact surface is provided at a first distance from the first pivot and the second or push contact surface is provided at a second distance from the second pivot, wherein the first distance is different from the second distance.

The 2-way paddle shifter according to the present invention can be used in real life in racing cars and certain high performance road cars for shifting gears, for example. In the present case, the 2-way paddle shifter is typically used for a simulator environment, wherein the shifter is connected to a (game) console or computer, thereby enabling a user to provide input to the simulation software, such as for racing simulation. Such racing simulation software can be used for gaming, testing et cetera. In operation, the 2-way paddle shifter is preferably provided with, or operatively connected to, a controller having a processor, such as a microprocessor, and a memory module that are optionally combined in the microcontroller unit, for example in a single integrated circuit with embedded memory. Such controller receives the input signal from the paddle shifter according to the present invention, and is further configured to transmit the generated input to the connected devices via one or more connection interfaces. It will be understood that the controller may comprise one or more sub-controllers, wherein the sub-controllers are optionally microcontrollers, preferably having an embedded memory module.

The 2-way paddle shifter according to the invention is provided with a housing comprising one or more paddles. Preferably, each paddle has a first pull contact surface and a second push contact surface. Both surfaces are capable of activating a respective function, such as a gear shift for switching gears up or down. It will be understood that other functions can also be applied. Preferably, the contact surfaces are provided at or near an end or lever that is capable of moving against a functional resistance. Such functional resistance is also referred to as a counter force and can be provided by a magnet and a magnet contact. The magnets can be a permanent magnet, electromagnets, or other suitable means for generating a resistance or counterforce.

The paddle shifter according to the invention further comprises first and second pivots that are preferably associated with the first and second contact surfaces, and respective slots that enable a relative movement between the contact surfaces and the respective pivots. This movement may involve both a rotational movement in one slot and a translational type of movement in another slot. Depending on the desired functionality, the respective contact surfaces are pulled or pushed. In case of a user engaging a pulling contact surface the first or pull contact surface rotates around the first pivot in the respective first slot, while the second pivot is moved in the respective second slot to enable such rotational movement around the first pivot. In this situation the second pivot moves in a(n) (approximate) translational movement in the slot. When a user provides a pushing force to second or push contact surface this surface will make a rotational movement around the second pivot in the respective second slot, while the first pivot makes a(n) (approximate) translational movement in the respective first slot, thereby enabling the rotational movement around the second pivot.

According to the invention the first or pull contact surface is provided at a first distance from the first pivot and the second or push contact surface is provided at a second distance from the second pivot, wherein the first distance is different from the second distance. By having different distances, the lever or arm between the contact surfaces and the respective pivots is also different. As a result of the difference between the levers or arms, the push and pull forces that are needed for overcoming the functional resistance or counterforce is also different. It will be understood that this will improve the user experience and will also improve user control when operating the 2-way paddle shifter. This difference in the resistance or counterforce experience between pushing and pulling is then capable of compensating for fingers of a user that are generally stronger when grabbing or closing in case of pulling the paddle towards a user or driver, as compared to pushing the paddle away from the user or driver. Therefore, the 2-way paddle shifter according to the present invention better matches finger strength in each direction.

Preferably, the first distance is smaller than the second distance. This provides an effective embodiment of the 2-way paddle shifter, wherein the experienced pushing force is smaller than the experienced pulling force.

Although more than one magnet can be provided, the 2-way paddle shifter according to the invention can be provided with a single magnet. Due to the differences between the first and second distances different resistances or counterforces apply when pushing or pulling the respective contact surfaces. As a further advantage, the configuration of a 2-way paddle shifter according to the present invention can be built in a relatively compact way, which enables a relatively easy implementation of the 2-way paddle shifter in combination with a steering wheel, for example. Furthermore, the push and pull operations may have different motion arcs that are more in line with natural hand movements. This contributes to an even further improved user experience and user control.

The magnet contact can also be a magnet or a metal element such as a steel plate element that is preferably retained fixed in the housing of the 2-way paddle shifter.

In one of the embodiments of the invention the slots are placed in the moving part of the 2-way paddle shifter and are operatively connected with the paddle and its contact surfaces. In such embodiment, the pivots preferably comprise shafts that are mounted to side plates or other stationary elements that support the moving parts. These stationary parts can be part of the steering wheel housing or a separate housing for the paddle shifter. In another alternative embodiment the pivots are mounted in a stationary manner to the moving paddles and its contact surfaces and the slots are provided in the stationary parts, for example side plates. It will be understood that in both embodiments the effect of differences in the effective resistance or counterforce between a pushing or pulling operation can be achieved in accordance with the present invention.

In a presently preferred embodiment of the invention the first pivot is provided at a first magnet distance from the magnet and the second pivot is provided a second magnet distance from the magnet.

By providing the pivots at a respective distance from the magnet an arm or lever is provided. When engaging the first or pull contact surface the ratio between the first magnet distance and the first distance is about equal to the ratio between the required pulling force and the magnetic (counter)force generated by the magnet and the magnet contact. For example, when the ratio between the first magnetic distance and the first distance is about 0.5, a 2 kg magnet takes 1 kg of pulling force when engaging the first or pull contact surface. When engaging the second or push contact surface the required push force is determined by multiplying the ratio between the second magnet distance and the second distance with the magnetic (counter)force. For example, in case the ratio between the second magnetic distance and the second distance is about 0.2, a 2 kg magnet requires 0.4 kg of pushing force when engaging the second or push contact surface. These examples indicate the possibility to experience different forces when pulling or pushing the paddle, while applying a single magnet and magnet contact. As indicated earlier, this provides a compact 2-way paddle shifter according to the present invention.

In one of the presently preferred embodiments the first magnet distance is larger than the second magnet distance. By providing different magnet distances the difference between the required pushing force and pulling force can be designed effectively. It will be understood that when the ratios between the respective distances and magnetic distances are fixed, the required forces can be changed by using stronger magnets, stacking multiple magnets and/or increasing the distance between magnet and magnet contact. Alternatively, or in addition thereto, the magnetic contact can also be embodied as a magnet to further enhance the magnetic force.

In a presently preferred embodiment the ratio of the first magnet distance and the distance is larger than the ratio of the second magnet distance and the second distance.

By having different ratios, the required pull force is larger than the required push force when activating the first or second function, respectively. This improves the user experience that is in conformity with the naturally occurring higher grabbing force versus pushing force in fingers of a user of the 2-way paddle shifter according to the present invention.

Setting the ratios between the first magnetic distance and the first distance and the second magnetic distance and the second distance provides a fixed push/pull force ratio of the paddle shifter. This enables an effective design of the forces required in the 2-way paddle shifter according to an embodiment of the present invention.

In certain embodiments of the present invention the slots can be provided as openings. The slots enable a rotational movement of the pivots and enable an )approximate) translational movement in the slot. The actual movement depends on the contact surface that is actually engaged by the user.

In a presently preferred embodiment of the invention the first and/or second slot is a trapezoid slot.

By providing slots having a trapezoid shape the pivots are capable of allowing a rotational movement as well as a(n) (approximate) translational movement if required. This enables an easy relative movement between the slots and the pivots.

In a further preferred embodiment of the invention the first and/or second pivot comprise a shaft.

By providing a shaft the pivots can be provided in a robust manner. For example, the shafts can be of a metal or other suitable material. Preferably, the shaft comprises a noise reducing surface. This provides a user-friendly paddle shifter. Such noise reducing surface may comprise a silicon layer. Such layer can be attached to the shaft as a separate element or can be provided as a coating layer, for example.

In addition to the noise reducing surface, or as an alternative thereto, the pivots can be provided with a friction reducing surface. Optionally, a first slot end of the respective slots can also be provided with a friction reducing surface to reduce the frictional resistance against the relative movement between the first slot end and the pivot in the rotational movement.

In a further preferred embodiment of the invention the first and/or second slots are provided with first and second slot ends. The first slot end is preferably configured for engaging the respective pivot in the rotational movement. The second slot end is preferably configured for engaging the respective pivot as a stop against the movement, in particular for stopping the (approximate) translational movement of the pivot in the slot. By providing the second slot end as a stop an over-rotation of the paddles is effectively prevented. This further improves the robustness of the 2-way paddle shifter according to the invention.

Alternatively, or in a combination with a second slot end acting as stop, at least one separate stop can be provided that is configured for engaging a stop surface of the housing for stopping movement of the respective paddle. Such additional stop also improves the overall robustness of the 2-way paddle shifter. Preferably, in case of applying separate stops, there are two stops provided to have a similar effect in both the pushing and pulling operation.

In a presently preferred embodiment of the invention the housing further comprises a sensor for detecting activation of the first or second function.

Providing a sensor enables relatively easy detection of a user activation of the first and/or second function by the respective engagement of the first and/or second contact surface. The sensor can be located in the slots and/or pivots and/or stops and/or can be provided in combination with the contact surfaces. Such sensor may involve application of a microswitch or so-called Hall-sensor. It will be understood that other locations and/or sensor types can be envisaged in accordance with the present invention.

In a presently preferred embodiment, the housing is provided with a sensor arm comprising a magnet as part of the sensor. Such sensor arm enables an effective sensor, wherein in a presently preferred embodiment the magnet of the sensor is configured for co-operation with a Hall-sensor. This provides an effective sensor that is capable of correctly detecting activation of the first or second function.

In a presently preferred embodiment the Hall-sensor is provided on the printed circuit board. This generates a direct signal on such printed circuit board which provides a fast response to an engagement of the first or second contact surface by a user. Furthermore, this reduces the number of required components, thereby contributing to a robust and cost-effective paddle shifter. The sensor arm enables contactless sensing that is durable and obviates the need for separate cables. The printed circuit board can be (part of) a main steering wheel circuit board to which most of the front facing buttons and dials of such steering wheels are mounted. This provides a practicable and cost-effective implementation of the 2-way paddle shifter in such embodiment of the present invention.

The present invention further relates to steering wheel comprising a 2-way paddle shifter according to an embodiment of the present invention and/or a simulator comprising such steering wheel and/or 2-way paddle shifter.

The steering wheel and/or simulator provide the same or similar effects and/or advantages as described in relation to the 2-way paddle shifter.

The invention further also relates to a method for generating a double functionality in a simulator environment, the method comprising the steps of:
- providing a 2-way paddle shifter and/or steering wheel and/or simulator according to an embodiment of the present invention;
- activating a first function by pulling a first or pull contact surface and/or activating a second function by pushing a second or push contact surface; and
- generating a signal for a process controller.

The method provides the same or similar effects and/or advantages as described in relation to the 2-way paddle shifter, steering wheel and/or simulator provided therewith.

Further advantages, features and details of the invention are elucidated on the basis of preferred embodiments thereof, wherein reference is made to the accompanying drawings, in which:
- Figure 1 shows a steering wheel with a 2-way paddle shifter in an embodiment according to the present invention;
- Figures 2A-C show the 2-way paddle shifter in an embodiment according to the present invention in respectively a rest position, pulling position and pushing position;
- Figures 3A-C show another embodiment of the paddle shifter according to the present invention being provided with a sensor arm in a resting position, pulling position and pushing position, respectively;
- Figure 4 shows a further alternative embodiment of the paddle shifter according to the present invention;
- Figures 5A-C show an even further alternative embodiment of the paddle shifter according to the present invention in a resting position, pulling position and pushing position, respectively; and
- Figure 6 shows a simulator comprising an embodiment of the steering wheel and paddle shifter according to the present invention.

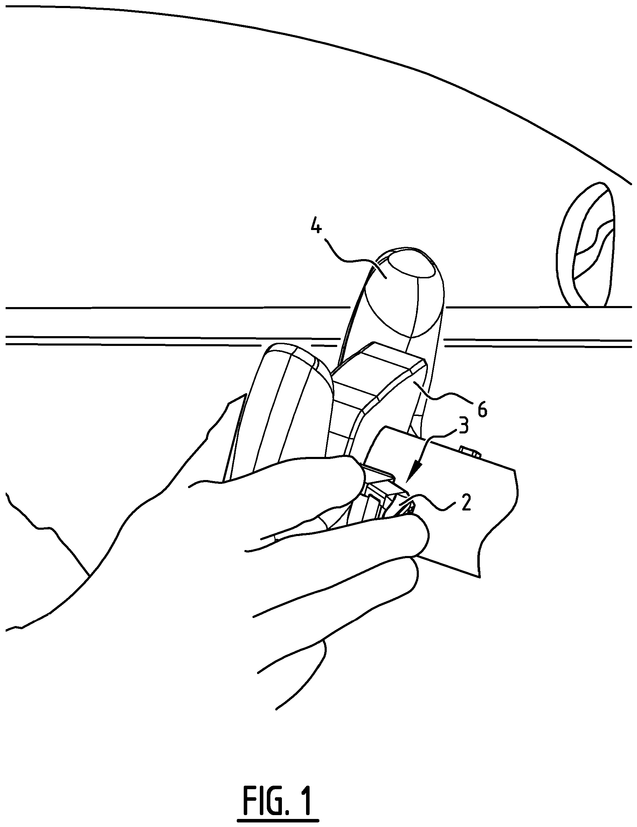

Paddle shifter 2 (figure 1) having a number of paddles 3 is connected to steering wheel 4 that is placed on console 6. Console 6 can be part of a car or simulator environment.

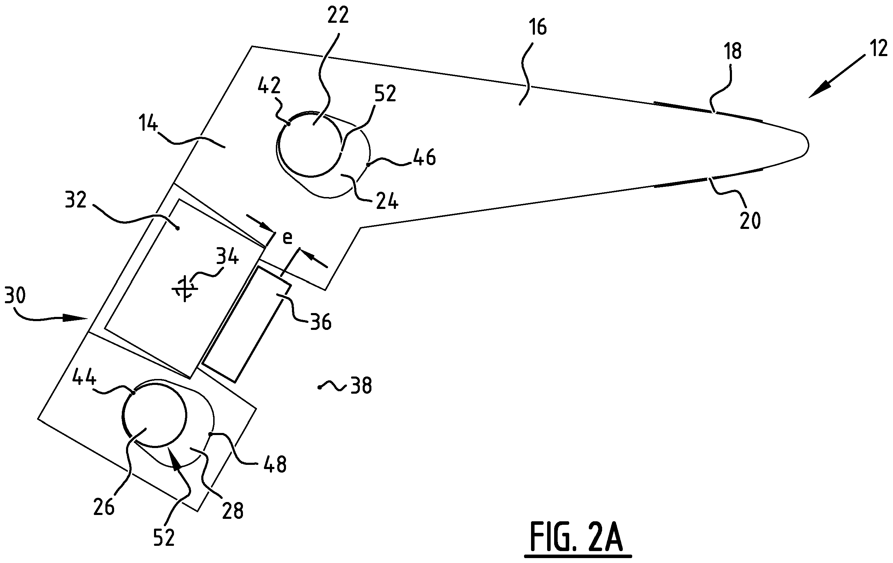

Paddle shifter 12 (figures 2A-C) comprises housing 14 and lever/arm 16 of paddle 3. Pulling contact surface 18 and pushing contact surface 20 are provided at or near the outer end of lever 16. Housing 14 with paddle 3 is capable of moving relative to pivot 22 that is providing in first slot 24. Housing 14 is also capable of moving relative to second pivot 26 that is provided in second slot 28. Housing 14 further comprises room or chamber 30 in which magnet 34 can be provided. Contact element 36 is illustrated as a steel plate is provided in fixed console 38. In the illustrated embodiment magnet 32 is provided at distance `e' to contact element 36 in the rest position (Figure 2A).

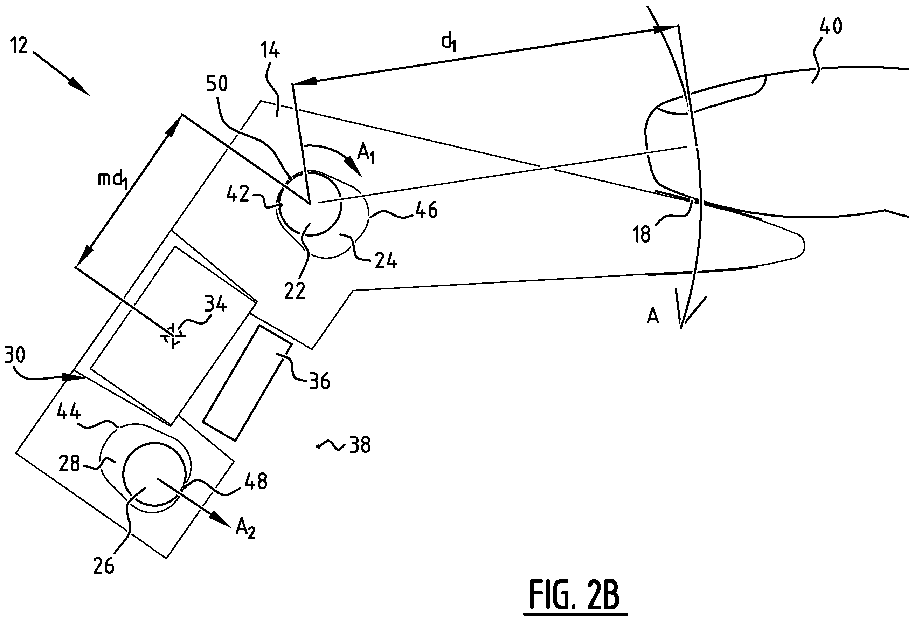

In a pulling operation of paddle shifter 12 (figure 2B) finger 40 engages first contact surface 18 in direction 'A' such that housing 14 rotates in direction 'A1' around first pivot 22 and second pivot 26 moves in direction 'A2' in second slot 28. In this embodiment, movement in direction 'A2' relates to an approximate translational movement in slot 26 as a result of the rotation of housing 14/paddle 3 around first pivot 22. In this embodiment the effective distance between the pulling force in direction 'A' and pivot 22 is referred to as first distance 'd1'. The effective distance between first pivot 22 and a relevant point of gravity 34 of magnet 34 is referred to as first magnet distance 'md1'.

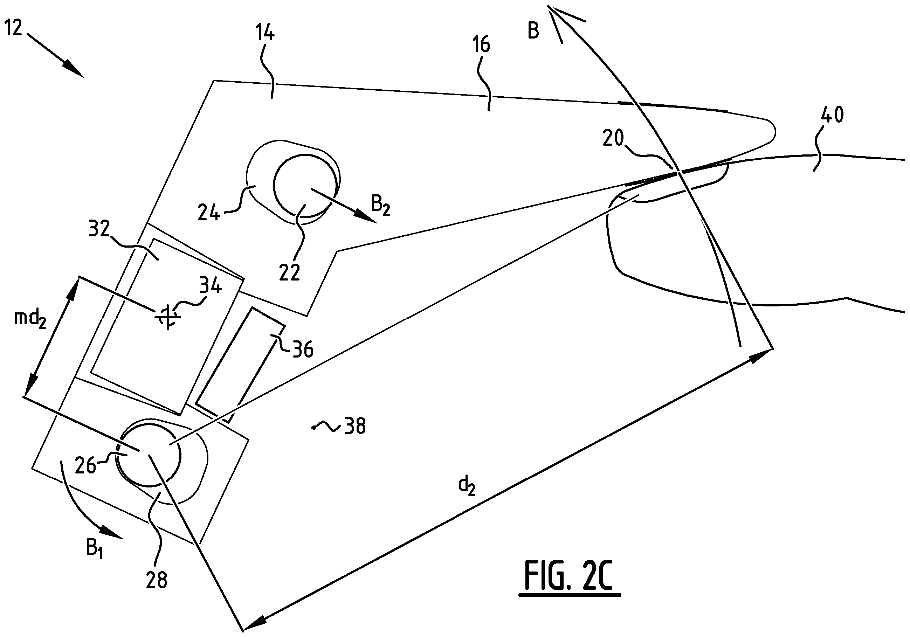

In a pushing operation of paddle shifter 12 (figure 2C) finger 40 engages second contact surface 20 in direction 'B' such that first pivot 22 makes a relevant movement to first slot 24 in direction `B2', while housing 14/paddle 3 rotates around second pivot 26 in direction 'B1' in slot 28. In the illustrated embodiment the effective distance between pushing force in direction 'B' and second pivot 26 is referred to as distance 'd2' and the effective distance between second pivot 26 and the point of gravity 34 of magnet 32 as refer to a second magnet distance 'md2'.

In this illustrated embodiment. paddle shifter 12 is provided with first slot 24 and second slot 28, wherein each slot 24, 28 is provided with first respective ends 42, 44 at which the respective pivots 22, 26 may rotate in the respective pulling or pushing operation. Furthermore, slots 24, 28 are provided with respective second ends 46, 48. These respective second outer ends 46, 48 act as stops limiting movements of housing 14/paddle 3. Optionally, outer ends 42, 44, 46, 48 and/or pivots 22, 26 are provided with sensor 50 (only schematically illustrated). Sensor 50 is capable of detecting the position of paddle shifter 12 in the rest position, pulling position or pushing position, and is thereby capable of detecting which function needs to be activated.

In the illustrated embodiment, the pulling force relates to ratio between the first magnetic distance 'md1' and the first distance 'd1' multiplied with the magnetic force achieved with magnet 32 and contact element 36. In the pushing operation the pushing force is related to the ratio between the second magnet distance 'md2' and second distance 'd2' multiplied with the magnetic force. In the illustrated embodiment. The ratio between first magnet distance 'md1' and first distance 'd1' is about 0.5 such that the 2 kg magnet force requires 1 kg pulling force. Also, in the illustrated embodiment, the ratio between second magnet distance 'md2' and distance `d2' is about 0.2 such that the 2 kg magnet force requires 0.4 kg of pushing force. It will be understood that other ratios and forces can also be envisaged in accordance with the present invention.

In the illustrated embodiments, pivots 22, 26 are provided as metal shafts and comprise a coating layer or other material layer 52 that in this illustrated embodiment is preferably both noise and friction reducing. In the illustrated embodiment first outer ends 42, 44 of slots 24, 28 are optionally provided with a friction reducing coating. Slots 24, 28 in these illustrated embodiments have a trapezoid shape. It will be understood that other shapes for slots 24, 28 can also be envisaged in accordance with the present invention.

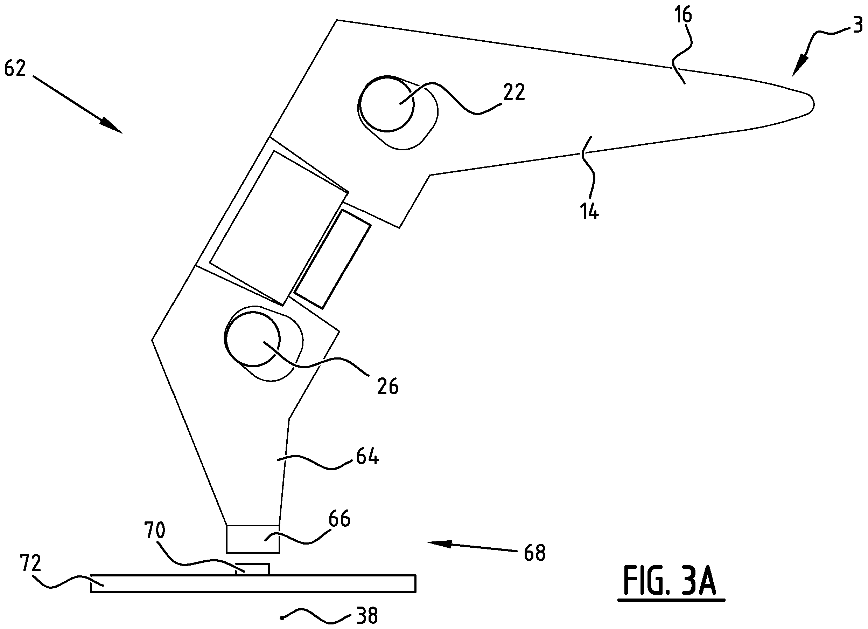

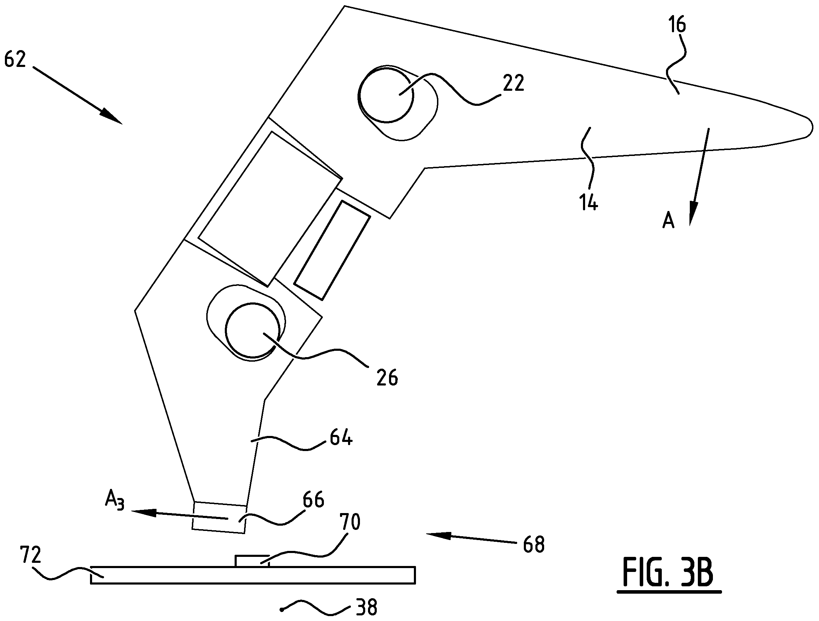

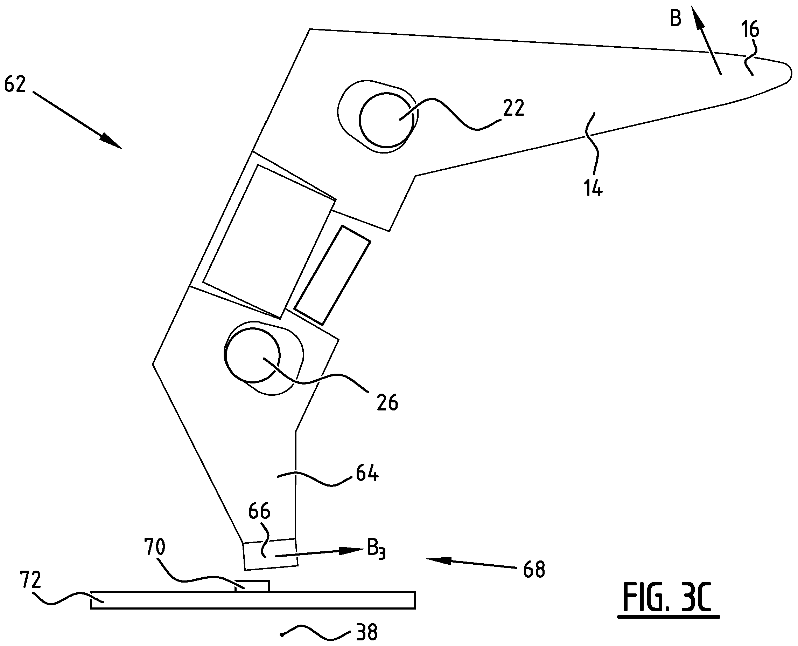

In an alternative embodiment paddle shifter 62 (figures 3A-C) comprises the same or similar elements as disclosed in relation to paddle shifter 2 (figure 1) and paddle shifter 12 (figures 2A-C). This alternative embodiment of shifter 62 (figures 3A-C) comprises sensor arm 64 that is provided with magnet 66 has part of sensor 68. Magnet 66 co-operates with Hall-sensor 70 that is provided on printed circuit board 72 that is provided in, or attached to, console 38. In this illustrated embodiment, in rest position of paddle shifter 26 (figure 3A) magnet 66 is positioned directly above Hall-sensor 70. In a pulling operation (figure 3B) magnet 66 moves in direction 'A3' and Hall-sensor 70 detects the direction of movement and activates the respective function. In a pushing operation (figure 3C) magnet 66 moves in direction `B3' and Hall-sensor 70 detects the respective movement and activates the respective function.

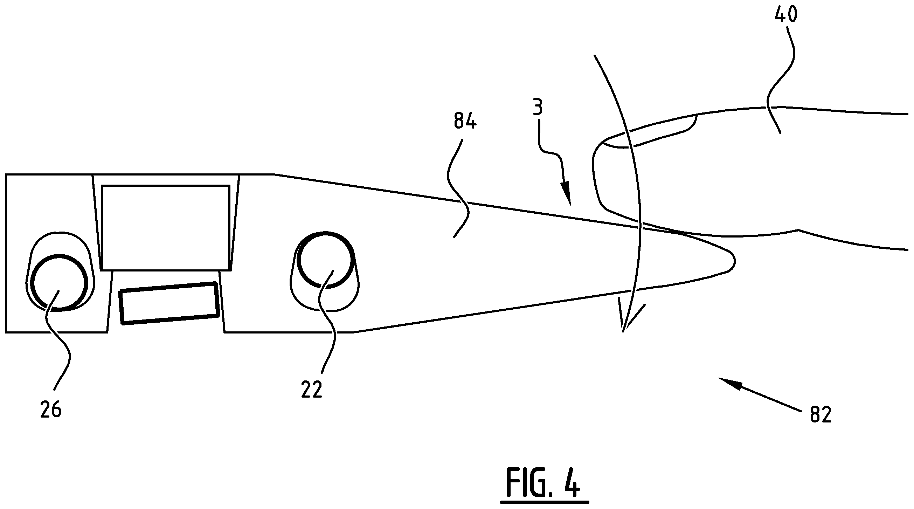

In a further alternative embodiment of paddle shifter 82 (figure 4), lever 84 of paddle 3 is provided in a substantially straight line with respective first and seconds pivots 22, 26. The operation of alternative paddle shifter 82 is similar to the operation of the other illustrated paddle shifters 2, 12, 62. It is noted that the embodiments with an angled lever in paddle shifters 2, 12, 62 are in most cases allowing easier placement on the back of steering wheel 4.

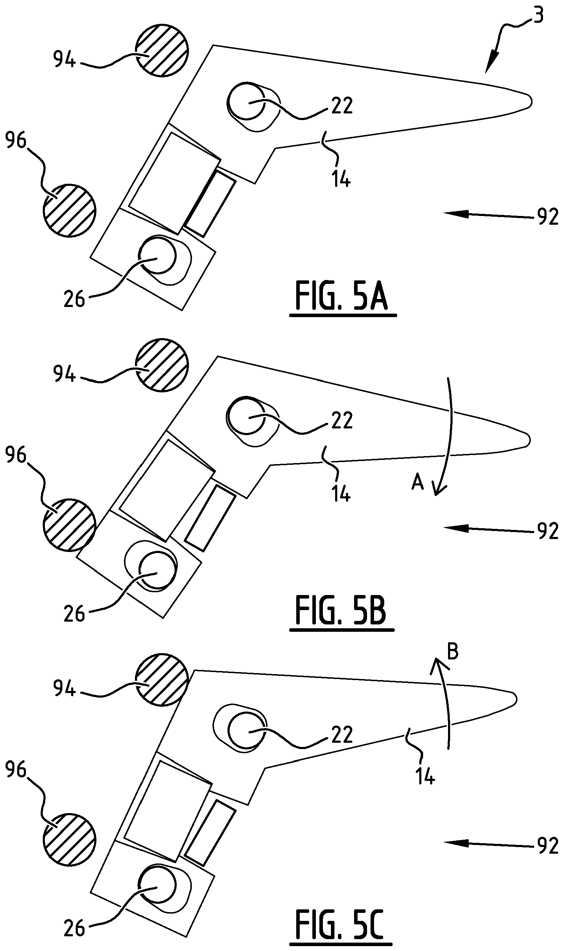

In a further alternative embodiment of paddle shifter 92 (figures 5A-C) additional stops 94, 96 are provided. Shifting paddle 92 comprises the same or similar elements as disclosed for paddle shifters 2, 12, 62, 82. In the resting position of paddle shifter 92 (figure 5A) there is no contact between housing 14 and stops 94, 96. In a pulling operation housing 14/paddle 3 moves in direction 'A' and contacts stop 96. In the pushing operation of paddle shifter 92 (figure 5C) housing 14/paddle 3 engages stop 94.

It will be understood that features and elements of the different paddle shifters 2, 12, 22, 62, 82, 92 can be combined into other embodiments in accordance with the present invention. This may include the presence of sensors 50, 68, sensor arms 64, the presence of coatings or other frictional noise reducing material 52 etcetera. It is also noted that in the illustrated embodiments housing 14 with slots 24, 28 move relative to fixedly positioned pivots 24, 26. It will be understood that also a different configuration is possible wherein pivots 22, 26 move relative to the fixedly provided slots 24, 28. Furthermore, slots 24, 28 are illustrated with a trapezoid shape. It will be understood that other suitable shapes can also be envisaged in accordance with the present invention, for example longitudinal slots, circular slots, ellipsoid slots et cetera.

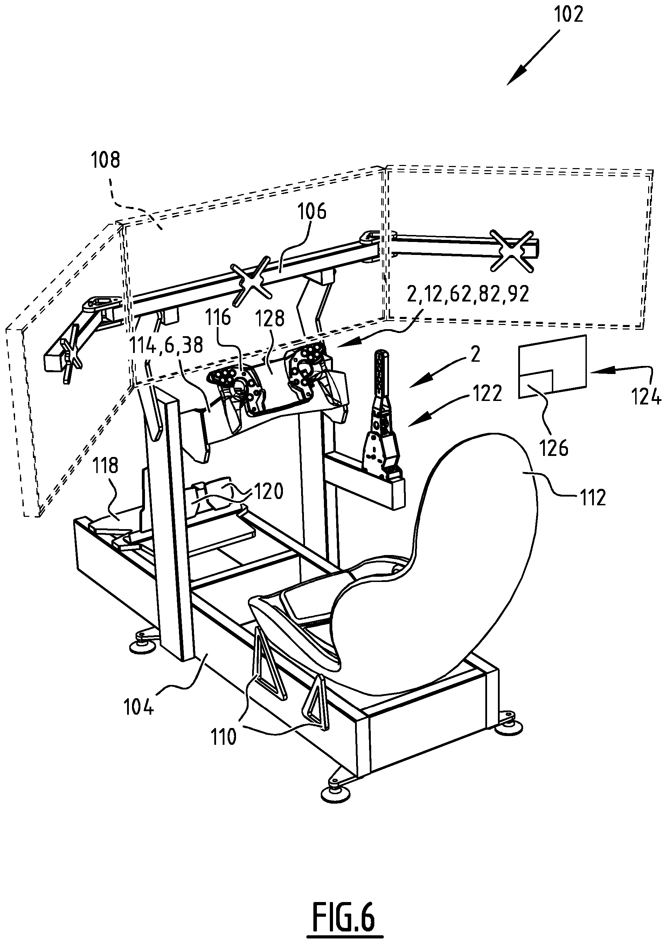

Simulator 102 (figure 6) comprises frame 104 with metal subframe 106 to which some monitors 108 can be attached. Simulator 102 comprises chair frame 110 to which chair 112 can be attached. Furthermore, there is provided steel frame 114 to which steering wheel 4, 116 can be provided. Steering wheel 4, 116 is provided with paddle shifter 2, 12, 62, 82, 92. In this illustrated embodiment simulator 102 is provided with paddle frame 118 and paddles 120. Computer 124 with software 126 thereon is schematically illustrated. Also schematically illustrated is printed circuit board 128 that is provided in console 114, 6, 38. Optionally, joystick 122 can be provided.

The present invention is by no means limited to the above-described preferred embodiments thereof. The rights sought are defined by the following claims, within the scope of which many modifications can be envisaged.

## Claims

1. 2-way paddle shifter for a simulator environment, the paddle shifter comprising:
- a housing comprising one or more paddles, wherein the one or more paddles are provided with a first or pull contact surface for activating a first function and a second or push contact surface for activating a second function;
- a magnet and a magnet contact that are configured for engaging each other to provide a functional resistance against activating the first and/or second function;
- a first pivot and a first slot that are provided in the housing to enable a rotational movement of the respective paddle around the first pivot as a result of activating the first function;
- a second pivot and a second slot that are provided in the housing to enable a rotational movement of the respective paddle around the second pivot as a result of activating the second function;
wherein the first or pull contact surface is provided at a first distance from the first pivot and the second or push contact surface is provided at a second distance from the second pivot, wherein the first distance is different from the second distance.

2. 2-way paddle shifter according to the foregoing claim, wherein the first distance is smaller than the second distance.

3. 2-way paddle shifter according to the foregoing claims 1 or 2, wherein the first pivot is provided at a first magnet distance from the magnet and the second pivot is provided at a second magnet distance from the magnet.

4. 2-way paddle shifter according to the foregoing claim, wherein the first magnet distance is larger than the second magnet distance.

5. 2-way paddle shifter according to any of the foregoing claims 3 or 4, wherein the ratio of the first magnet distance and the first distance is larger than the ratio of the second magnet distance and the second distance.

6. 2-way paddle shifter according to any of the foregoing claims, wherein the first and/or second slot is a trapezoid slot.

7. 2-way paddle shifter according to any of the foregoing claims, wherein the first and/or second pivot comprise a shaft.

8. 2-way paddle shifter according to the foregoing claim, wherein the shaft comprises a noise reducing surface, and wherein the noise reducing surface preferably comprises a silicon layer.

9. 2-way paddle shifter according to any of the foregoing claims, wherein the first and/or second slots are provided with a first and a second slot end, wherein the second slot end is configured for engaging the respective pivot as a stop against the movement of the pivot in the slot.

10. 2-way paddle shifter according to any of the foregoing claims, further comprising at least one stop configured for engaging a stop surface of the housing for stopping movement of the paddle shifter.

11. 2-way paddle shifter according to any of the foregoing claims, wherein the housing further comprises a sensor for detecting activation of the first and/or second functions, and wherein the housing is preferably provided with a sensor arm comprising a magnet as part of the sensor.

12. 2-way paddle shifter according to the foregoing claim, wherein the magnet is configured for co-operation with a Hall-sensor, and wherein the Hall-sensor is preferably provided on a printed circuit board.

13. Steering wheel comprising a 2-way paddle shifter according to any of the foregoing claims.

14. Simulator comprising a 2-way paddle shifter and/or steering wheel according to any of the foregoing claims.

15. Method for generating a double functionality in a simulator environment, the method comprising the steps of:
- providing a 2-way paddle shifter and/or steering wheel and/or simulator according to any of the foregoing claims;
- activating a first function by pulling a first or pull contact surface and/or activating a second function by pushing a second or push contact surface; and
- generating a signal for a process controller.
